(19) Europäisches Patentamt
European Patent Office
Office européen des brevets

(11) EP 4 005 793 A1

(12) EUROPEAN PATENT APPLICATION
published in accordance with Art. 153(4) EPC

(43) Date of publication:
**01.06.2022 Bulletin 2022/22**

(21) Application number: **20847686.1**

(22) Date of filing: **21.07.2020**

(51) International Patent Classification (IPC):
***B32B 27/00*** *(2006.01)* ***C08K 5/5425*** *(2006.01)*
***C08K 5/56*** *(2006.01)* ***C08L 83/07*** *(2006.01)*
***C09J 7/40*** *(2018.01)*

(52) Cooperative Patent Classification (CPC):
**B32B 27/00; C08K 5/5425; C08K 5/56; C09J 7/40**

(86) International application number:
**PCT/JP2020/028326**

(87) International publication number:
**WO 2021/020247 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2019 JP 2019139763**

(71) Applicant: **Shin-Etsu Chemical Co., Ltd.**
**Tokyo 100-0005 (JP)**

(72) Inventors:
- **KOBAYASHI, Ataru**
**Annaka-shi, Gunma 379-0224 (JP)**
- **IHARA, Toshiaki**
**Annaka-shi, Gunma 379-0224 (JP)**

(74) Representative: **V.O.**
**P.O. Box 87930**
**2508 DH Den Haag (NL)**

(54) **PLATINUM GROUP METAL-BASED CATALYST, CURABLE ORGANOPOLYSILOXANE COMPOSITION, AND RELEASE SHEET**

(57) The purpose of the present invention is to provide a platinum-group metal catalyst having high storage stability and being able to promote an addition reaction, even when the amount of the platinum-group metal catalyst is small; a curable organopolysiloxane composition comprising the catalyst; and a release sheet comprising a cured product of the composition. That is, the present invention provides a catalyst composition comprising: i) a platinum-group metal catalyst; and ii) an organopolysiloxane having at least two (meth)acryloyl groups in one molecule, wherein the amount of the platinum-group metal atom is 0.01 to 5.0 mass%, based on the total mass of the catalyst composition.



Processed by Luminess, 75001 PARIS (FR)

## Description

TECHNICAL FIELD

The present invention relates to a platinum-group metal catalyst useful as a catalyst having high storage stability and promoting hydrosilylation, a curable organopolysiloxane composition comprising the catalyst, and a release sheet comprising a cured product of the composition.

BACKGROUND OF THE INVENTION

A number of platinum-group metal catalysts are known as a hydrosilylation catalyst for crosslinking a polymer. Among these, platinum-vinyl siloxane complex catalysts, such as those described in Japanese Examined Patent Publication No. Sho 42-22924 or Japanese Examined Patent Publication No. Sho 46-28795, which are obtained by a reaction between a vinyl group-containing siloxane and a platinum compound such as chloroplatinic acid, have a high catalytic activity and are useful as a catalyst for hydrosilylation.
A number of curable organopolysiloxane compositions which crosslink by hydrosilylation are reported. As described in Patent Literature 1 (Japanese Patent Application Laid-Open No. Sho 47-32072), it is long known that in order to prevent adhesion or sticking of an adhesive material to a sheet-form substrate such as paper or plastic sheet, the curable organopolysiloxane composition is applied on the substrate and cured, and then used as a release sheet. This method of forming the release coating by hydrosilylation is excellent in curing and is versatile for a wide-range of release properties such as light-release and heavy-release, so that the method has been widely used.
The aforesaid platinum-group metal catalyst is comprised in a curable organopolysiloxane composition for release sheet usually in a platinum-group metal amount of 60 to 500 mass ppm, based on the composition. If the amount of the platinum-group metal is less than 60 mass ppm, the curing reaction does not proceed sufficiently, so that a larger amount of the Si-H group remains unreacted. The remaining unreacted organopolysiloxane transfers to the surface of the adhesive material to reduce the adhesive force of the adhesive material. Therefore, it is often difficult to reduce the amount of the platinum-group metal catalyst in the preparation of a release sheet.
Platinum-group metals are rare noble metals on the earth and expensive, so that the platinum-group metal catalyst accounts for a large part in the production costs of a release sheet. Reduction of the amount of the platinum-group metal catalyst leads to a total cost reduction, so that the reduction of the amount of the platinum-group metal catalyst is strongly desired.
Further, the platinum-group metal catalysts are known to turn black and less active due to aggregation of a platinum-group metal during long-term storage or storage at a high temperature. For the aforesaid platinum-vinyl siloxane complex catalyst, the aggregation of platinum metal may be suppressed by increasing the amount of the vinyl group-containing siloxane, but the catalytic activity decreases simultaneously, which is not desired. There is still a demand for the development of a platinum-group metal catalyst having high storage stability with the catalytic activity being maintained.
Japanese National Phase Publication No. 2018-520214 describes a method for reducing the amount of the platinum-group metal catalyst, wherein a release coating material comprises a silicone base polymer and an acrylate such as stearyl methacrylate and lauryl methacrylate. The acrylate functions as a promoter for hydrosilylation in the aforesaid coating material and, therefore, the amount of the platinum catalyst is reduced generally in release coating compositions. However, Japanese National Phase Publication No. 2018-520214 does not refer to the storage stability of the catalyst.

PRIOR LITERATURE

PATENT LITERATURE

Patent Literature 1: Japanese Examined Patent Publication No. Sho 42-22924 (1967)
Patent Literature 2: Japanese Examined Patent Publication No. Sho 46-28795 (1971)
Patent Literature 3: Japanese Patent Application Laid-Open No. Sho 47-32072 (1972)
Patent Literature 4: Japanese National Phase Publication No. 2018-520214

## SUMMARY OF THE INVENTION

### PROBLEMS TO BE SOLVED BY THE INVENTION

The purpose of the present invention is to provide a platinum-group metal catalyst having high storage stability and being able to promote an addition reaction, even when the amount of the platinum-group metal catalyst is small; a curable organopolysiloxane composition comprising the catalyst; and a release sheet comprising a cured product of the composition.

### MEANS FOR SOLVING THE PROBLEMS

The present inventors conducted keen research to solve the aforesaid problems in the prior art and have found that a catalyst composition which is a mixture of an organopolysiloxane having at least two (meth)acryloyl groups in one molecule and a platinum-group metal catalyst has high storage stability and promotes the addition reaction in a small amount. Further, they have found that an addition reaction-curable organopolysiloxane composition comprising the aforesaid catalyst composition has improved curability.

That is, the present invention provides a catalyst composition comprising: i) a platinum-group metal catalyst; and ii) an organopolysiloxane having at least two (meth)acryloyl groups in one molecule, wherein the amount of the platinum-group metal atom is 0.01 to 5.0 mass%, based on the total mass of the catalyst composition.

The present invention preferably provides the aforesaid catalyst composition, wherein the amount of the platinum-group metal atom is 0.1 to 0.6 mass%, based on the total mass of the catalyst composition.

Further, the present invention provides a curable organopolysiloxane composition comprising the following components (A) to (C):

(A) the aforesaid catalyst composition in such an amount that the amount of the platinum-group metal atom is 1 to 100 mass ppm, based on the total mass of components (A), (B) and (C);
(B) an organopolysiloxane having at least two alkenyl groups each bonded to a silicon atom; and
(C) an organohydrogen polysiloxane having at least two hydrogen atoms each bonded to a silicon atom in such an amount that the ratio of the number of hydrogen atoms each bonded to the silicon atom in component (C) to the number of the alkenyl groups in component (B) is 1 to 5;

and a release sheet comprising a cured product of the aforesaid composition.

### EFFECTS OF THE INVENTION

The catalyst composition of the present invention has a high catalytic activity and high storage stability, so that the catalyst composition is suited as a catalyst for hydrosilylation. Further, the curable organopolysiloxane composition comprising the catalyst composition of the present invention cures sufficiently, even when the amount of the catalyst is small, and forms a cured film showing a peeling force equal to that obtained with conventional compositions. Therefore, the curable organopolysiloxane composition is suited for preparing release sheets. The amount of the platinum-group metal atom contained in the curable organopolysiloxane composition may be reduced, so that a release sheet is produced at significantly low costs.

## DETAILED DESCRIPTION OF THE INVENTION

The present invention will be described below in detail.

<u>(A) Platinum-group metal catalyst composition</u>

Component (A) of the present invention is a platinum-group metal catalyst composition comprising: i) a platinum-group metal catalyst; and ii) an organopolysiloxane having at least two (meth)acryloyl groups in one molecule. The amount of the platinum-group metal catalyst i) in the aforesaid catalyst composition is such that the amount of the platinum-group metal atom is 0.01 to 5.0 mass%, preferably 0.015 to 4.75 mass%, more preferably 0.02 to 4.5 mass%, still more preferably 0.1 to 0.6 mass%, still more preferably 0.12 to 0.5 mass%, particularly preferably 0.15 to 0.45 mass%, based on the total mass of the catalyst composition (A). The amount of the organopolysiloxane ii) in the catalyst composition (A) is 99.9 mass% or less, preferably 99.85 mass% or less, preferably 99.75 mass% or less, more preferably 99.5 mass% or less, based on the total mass of component (A). The aforesaid catalyst composition may further comprise 99 mass% or less of iii) an organopolysiloxane having no (meth)acryloyl group as a diluent. The amount of the diluent

iii) is preferably 0.1 to 99 mass%, preferably 0.1 to 98.5 mass%, more preferably 1 to 97.5 mass%, still more preferably 3 to 95 mass%, still more preferably 5 to 90 mass%, still more preferably 10 to 80 mass%. When the composition comprises the aforesaid diluent, the amount of component ii) is preferably 0.5 to 99.5 mass%, more preferably 2.5 to 99.5 mass%, still more preferably 5 to 99 mass%.

The aforesaid catalyst composition may be prepared usually by mixing predetermined amounts of the aforesaid components i) and ii) and, if necessary, component iii). The order of the mixing is not particularly limited. When the aforesaid component iii) is incorporated, components ii) and iii) are uniformly mixed in advance and then component i) is added to the resulting mixture and mixed.

The platinum-group metal catalyst i) may comprise a conventional platinum-group metal complex as the main component. Examples of the platinum-group metal catalyst include chloroplatinic acid, an alcohol or aldehyde solution of chloroplatinic acid, a complex of chloroplatinic acid with an olefin, a complex of chloroplatinic acid with a vinyl group-containing organosiloxane, and a complex of platinum with a vinyl group-containing organosiloxane. The term "platinum-group metal atom" refers to a platinum atom contained in these catalysts. Among these, a complex of platinum with a vinyl group-containing organosiloxane is particularly preferred. This catalyst is obtained by reacting chloroplatinic acid hexahydrate ($H_2PtCl_6 \cdot 6H_2O$) with 1,3-divinyltetramethyldisiloxane. As a known catalyst, a Karstedt catalyst, that is, a complex of platinum with 1,3-divinyltetramethyldisiloxane is also preferred. For example, in the case of the Karstedt catalyst, the amount of the platinum-group metal atom in the catalyst (i.e., platinum-group metal concentration) is usually 17.0 to 24.0 mass%.

The organopolysiloxane ii) having at least two (meth)acryloyl groups in one molecule may be used either alone or in combination. The organopolysiloxane mixed with the platinum-group metal catalyst may enhance storage stability and catalytic activity of the platinum-group metal catalyst. The reason for this enhancement is not very clear, but is presumably because the (meth)acryloyl group-containing organopolysiloxane ii) coordinates on the platinum-group metal atom in some form.

The organopolysiloxane ii) has preferably 2 or more, preferably 3 to 200, more preferably 3 to 50, (meth)acryloyl groups in one molecule. If the number of the (meth)acryloyl groups is larger than the aforesaid upper limit, the compatibility of component (A) with components (B) and (C) may be worse in the composition, which is not preferred. If the number of the (meth)acryloyl groups is smaller than the aforesaid lower limit, the resulting catalyst composition may not have an improved storage stability. This is presumably because the organopolysiloxane does not coordinate strongly on the platinum-group metal atom.

The organopolysiloxane ii) preferably has a weight-average molecular weight of 500 or more, preferably 500 to 27,000, more preferably 580 to 20,000, still more preferably 650 to 10,000. If the weight-average molecular weight is smaller than the aforesaid lower limit, component (A) sometimes may have less storage stability, presumably because the organopolysiloxane coordinates weakly on the platinum-group metal atom. If the weight-average molecular weight is larger than the aforesaid upper limit, the compatibility of component (A) with components (B) and (C) may be worse, which is not preferred. In the present invention, the weight-average molecular weight of the organopolysiloxane is determined by gel permeation chromatography (GPC) (solvent: toluene) and reduced to polystyrene.

The structure of the organopolysiloxane ii) having at least two (meth)acryloyl groups in one molecule is not particularly limited and may be any of a linear, branched or network structure. In particular, the compound represented by the following formula (3) is preferred. The bonding order of the siloxane units shown in the following parentheses is not limited and they may be arranged at random or may form a block structure.

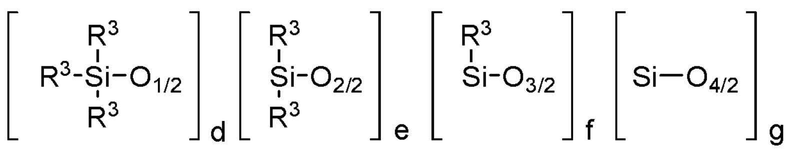

(3)

wherein $R^3$ is, independently of each other, a substituted or unsubstituted monovalent hydrocarbon group having 1 to 18 carbon atoms, an alkoxy group, a hydroxyl group, an epoxy group, a polyoxyalkylene group, or a (meth)acryloyl group-containing organic group, at least two of $R^3$ being a (meth)acryloyl group-containing organic group; d is an integer of 0 to 12; e is an integer of 0 to 500; f is an integer of 0 to 10; g is an integer of 0 to 5; and $2 \le d+e+f+g \le 500$.

In the aforesaid formula (3), the substituted or unsubstituted monovalent hydrocarbon group has 1 to 18 carbon atoms, preferably 1 to 12 carbon atoms, more preferably 1 to 8 carbon atoms. Examples of the aforesaid carbon group include alkyl groups such as methyl, ethyl, propyl, butyl, pentyl, hexyl, octyl, decyl, and dodecyl groups, alkenyl groups such as vinyl, allyl, butenyl, propenyl, 5-hexenyl, octenyl, and decenyl groups, cycloalkyl groups such as a cyclohexyl group, aryl groups such as phenyl, naphthyl, and tolyl groups, aralkyl groups such as benzyl and phenethyl groups, and those groups in which a part of the hydrogen atoms bonded to a carbon atom of these groups is substituted with a

halogen atom, epoxy group, amino group, polyether group, cyano group, or hydroxyl group. Examples of the alkoxy group include methoxy, ethoxy, propoxy, and butoxy groups. Examples of the polyoxyalkylene group include polyoxyethylene and polyoxypropylene groups.

In the aforesaid formula (3), at least two of $R^3$ are a (meth)acryloyl group-containing organic group. The amount of the silicon atoms having the (meth)acryloyl group-containing organic group is preferably 0.01 to 50 mol%, more preferably 0.05 to 45 mol%, still more preferably 0.1 to 40 mol%, relative to all of the silicon atoms. If the amount of the (meth)acryloyl group-containing organic group is smaller than the aforesaid lower limit, storage stability of component (A) may be poor because the organopolysiloxane does not sufficiently coordinate on the platinum-group metal atom. Further, the curing promoting effect is, sometimes, not sufficiently obtained. If the amount is larger than the aforesaid upper limit, the compatibility of component (A) with components (B) and (C) may be worse, which is not preferred.

The (meth)acryloyl group-containing organic group is more specifically a group represented by $CH_2=CR^4COOR^5$-. $R^4$ is a hydrogen atom or a methyl group, more preferably a hydrogen atom. $R^5$ is a divalent group having 1 to 20 carbon atoms, may have a branched or cyclic structure, and may contain an epoxy group, an ester bond, a urethane bond, an ether bond, an isocyanate bond, or a hydroxyl group. Examples of $R^5$ include divalent hydrocarbon groups such as linear alkylene groups such as methylene, ethylene, propylene, butylene, hexamethylene, octamethylene, and decylene groups, branched alkylene groups such as methylethylene and methylpropylene groups, cyclic alkylene groups such as a cyclohexylene group, alkenylene groups such as a propenylene group, arylene groups such as a phenylene group, and aralkylene groups such as methylenephenylene and methylenephenylenemethylene groups. In addition, these divalent hydrocarbon groups may have therein an ester bond, a urethane bond, an ether bond, or an isocyanate bond. $R^5$ may be a combination of these. Further, a part or all of the hydrogen atoms of these divalent hydrocarbon groups may be substituted with an epoxy group or a hydroxyl group. Among these, $R^5$ is preferably a propylene group.

In the aforesaid formula (3), d is an integer of 0 to 12, preferably 0 to 10, more preferably 0 to 8; e is an integer of 0 to 500, preferably 0 to 400, more preferably 2 to 300; f is an integer of 0 to 10, preferably 0 to 6, more preferably 0 to 3; and g is an integer of 0 to 5, preferably 0 to 4, more preferably 0 to 3. If e, f, or g is larger than the aforesaid upper limits, the viscosity may be higher and the compatibility of component (A) with components (B) and (C) may be worse. Further, d, e, f, and g satisfy the equation $2 \leq d+e+f+g \leq 500$, preferably $2 \leq d+e+f+g \leq 400$, more preferably $2 \leq d+e+f+g \leq 300$.

The following are examples of the organopolysiloxane represented by the aforesaid formula (3).

$$(AMeSiO_{2/2})_{3\sim10}$$

$$(Me_3SiO_{1/2})_2(AMeSiO_{2/2})_{2\sim200}(Me_2SiO_{2/2})_{0\sim495}$$

$$(Me_3SiO_{1/2})_{0\sim1}(A'Me_2SiO_{1/2})_{1\sim2}(AMeSiO_{2/2})_{0\sim200}(Me_2SiO_{2/2})_{0\sim495}$$

$$(Me_3SiO_{1/2})_{3\sim12}(AMeSiO_{2/2})_{0\sim200}(Me_2SiO_{2/2})_{0\sim493}(ASiO_{3/2})_{0\sim9}(MeSiO_{3/2})_{1\sim10}$$

$$(Me_3SiO_{1/2})_{0\sim11}(A'Me_2SiO_{1/2})_{1\sim12}(AMeSiO_{2/2})_{0\sim200}(Me_2SiO_{2/2})_{0\sim493}(ASiO_{3/2})_{0\sim9}(MeSiO_{3/2})_{1\sim10}$$

$$(Me_3SiO_{1/2})_{3\sim12}(AMeSiO_{2/2})_{0\sim200}(Me_2SiO_{2/2})_{0\sim494}(ASiO_{3/2})_{1\sim10}(MeSiO_{3/2})_{0\sim9}$$

$$(Me_3SiO_{1/2})_{4\sim12}(AMeSiO_{2/2})_{0\sim200}(Me_2SiO_{2/2})_{0\sim492}(SiO_{4/2})_{1\sim5}$$

$$(Me_3SiO_{1/2})_{5\sim12}(AMeSiO_{2/2})_{0\sim200}(Me_2SiO_{2/2})_{0\sim490}(ASiO_{3/2})_{0\sim9}(MeSiO_{3/2})_{1\sim10}(SiO_{4/2})_{1\sim5}$$

$$(Me_3SiO_{1/2})_{0\sim11}(A'Me_2SiO_{1/2})_{1\sim12}(AMeSiO_{2/2})_{0\sim200}(Me_2SiO_{2/2})_{0\sim490}(ASiO_{3/2})_{0\sim9}(MeSiO_{3/2})_{1\sim10}(SiO_{4/2})_{1\sim5}$$

$$(Me_3SiO_{1/2})_{5\sim12}(AMeSiO_{2/2})_{0\sim200}(Me_2SiO_{2/2})_{0\sim491}(ASiO_{3/2})_{1\sim10}(MeSiO_{3/2})_{0\sim9}(SiO_{4/2})_{1\sim5}$$

In the aforesaid formulas, Me is $CH_3$-, A is $CH_2=CHCOOC_3H_6$- or $CH_2=C(CH_3)COOC_3H_6$-, and A' is $CH_2=CHCOOCH_2$- or $CH_2=C(CH_3)COOCH_2$-.

The catalyst composition (A) may further comprise iii) an organopolysiloxane having no(meth)acryloyl group, as a diluent. The organopolysiloxane may contain any substituent other than a (meth)acryloyl group. Examples thereof include organopolysiloxanes having the substituent represented by $R^3$ in the aforesaid formula (3), precluding the (meth)acryloyl group-containing organic group. The molecular structure of the organopolysiloxane iii) may be, for example, any of a linear, cyclic, branched, or three-dimensional network structure. Its viscosity is not limited, as long as it functions as a diluent. The viscosity at 25°C is preferably 1 to 10,000 mPa·s, more preferably 1 to 1,000 mPa·s, as

determined by a rotational viscometer. If the viscosity is lower than the aforesaid lower limit, the coating amount may be insufficient. If the viscosity is higher than the aforesaid upper limit, the workability may be worse. When the catalyst composition contains the aforesaid diluent iii), the amount of it may be 99 mass% or less, preferably 0.1 to 99 mass%, preferably 0.1 to 98.5 mass%, more preferably 1 to 97.5 mass%, still more preferably 3 to 95 mass%, still more preferably 5 to 90 mass%, still more preferably 10 to 80 mass%, based on the total mass of component (A).

Curable organopolysiloxane

The present invention further provides a curable organopolysiloxane composition comprising the following components (A) to (C):

(A) the aforesaid catalyst composition in such an amount that the amount of the platinum-group metal atom is 1 to 100 mass ppm, relative to the total mass of the components (A), (B), and (C);
(B) an organopolysiloxane having at least two alkenyl groups bonded to a silicon atom; and
(C) an organohydrogen polysiloxane having at least two hydrogen atoms bonded to a silicon atom in such an amount that the ratio of the number of the hydrogen atoms bonded to the silicon atom in component (C) to the number of the alkenyl groups in component (B) is 1 to 5.

The present invention also provides a release sheet comprising a cured product of the composition.
The amount of component (A) in the aforesaid curable organopolysiloxane composition may be a so-called catalytic amount, that is, an effective amount to promote the addition reaction of component (B) with component (C). Conventionally, in a curable organopolysiloxane composition for release sheets, the amount of a catalyst to form a cured film is usually 60 to 500 mass ppm as the amount of the platinum-group metal atom. In the present invention, however, the amount of the catalyst composition (A) is such that the amount of the platinum-group metal atom is 1 to 100 mass ppm, preferably 1 to 70 mass ppm, more preferably 1 to 50 mass ppm, relative to the total mass of the curable organopolysiloxane composition, i.e., the total mass of components (A) to (C). Even such a small amount of platinum-group metal atom in the catalyst composition (A) promotes the curing reaction sufficiently.
Further, the amount of the catalyst composition (A) in the curable organopolysiloxane composition is preferably such that the amount of the organopolysiloxane ii) contained in component (A) is 0.01 to 5 parts by mass, preferably 0.05 to 3 parts by mass, more preferably 0.1 to 2 parts by mass, relative to the total 100 parts by mass of components (A), (B), and (C). If the amount is less than the aforesaid lower limit, the curable organopolysiloxane composition may not have a sufficient curing-promoting effect and may have worse storage stability. If the amount is more than the aforesaid upper limit, the amount of transferred component may increase when a release sheet having the cured product is peeled off from an adhesive material. Then, the residual adhesion of the adhesive material and adhesion may be lower.
Components (B) and (C) comprised in the curable organopolysiloxane composition will be explained below in further detail.

Component (B)

Component (B) is an organopolysiloxane represented by the following average composition formula (1) and having at least two alkenyl groups bonded to the silicon atom in one molecule.

$$R^1_aSiO_{(4-a)/2} \qquad (1)$$

wherein $R^1$ is, independently of each other, a substituted or unsubstituted monovalent hydrocarbon group, at least two of $R^1$ are an alkenyl group, and "a" is a positive number satisfying the equation $0<a\leq3$.
Component (B) may be used either alone or in combination, if needed.
Component (B) preferably has a vinyl value of 0.001 to 0.7 mol/100 g, more preferably 0.005 to 0.5 mol/100 g, more preferably 0.01 to 0.1 mol/100 g. If the vinyl value is smaller than the aforesaid lower limit, the number of reaction points may be too small, so that curing may be insufficient. If the vinyl value is larger than the aforesaid upper limit, the crosslink density is too high, so that the peeling force may be too strong. The alkenyl group preferably has 2 to 8 carbon atoms, more preferably 2 to 4 carbon atoms. Examples of the alkenyl group include vinyl, allyl, butenyl, pentenyl, hexenyl, and heptenyl groups. Among these, a vinyl group is preferred.
Examples of the substituted or unsubstituted monovalent hydrocarbon group other than the alkenyl group in component (B) include substituted or unsubstituted monovalent hydrocarbon groups having 1 to 12, preferably 1 to 10 carbon atoms. Examples of the monovalent hydrocarbon groups include alkyl groups such as methyl, ethyl, propyl, butyl, pentyl, hexyl, and heptyl groups; cycloalkyl groups such as a cyclohexyl group; aryl groups such as phenyl, tolyl, xylyl, and naphthyl groups; and aralkyl groups such as benzyl and phenethyl groups; and those hydrocarbon groups wherein

a part or all of the hydrogen atoms bonded to a carbon atom is substituted with a halogen atom such as a chlorine atom, a fluorine atom and a bromine atom, such as halogenated alkyl groups such as chloromethyl, 3-chloropropyl, and 3,3,3-trifluoropropyl groups. Among these, alkyl groups are preferred, and a methyl group is more preferred.

In the aforesaid formula (1), "a" is a positive number satisfying the equation $0<a\leq 3$ and the organopolysiloxane may be either linear or branched. The viscosity at 25°C of component (B) as determined by a rotational viscometer is not particularly limited and the viscosity of a 30 mass% solution in toluene is preferably 5 to 70,000 mPa·s, more preferably 7 to 60,000 mPa·s. Here, the viscosity of a 30 mass% solution in toluene is the viscosity of a 30 mass% solution of the organopolysiloxane in toluene. If the viscosity is lower than the aforesaid lower limit, the coating amount may be insufficient. If the viscosity is higher than the aforesaid upper limit, workability of the composition may be poor.

Component (B) preferably has a weight average molecular weight of 100 to 300,000, more preferably 500 to 280,000. If the weight average molecular weight of component (B) is smaller than the aforesaid lower limit, the coating amount may be insufficient. If the weight average molecular weight is larger than the upper limit, workability of the composition may be poor. In the present invention, the weight average molecular weight may be determined by gel permeation chromatography (GPC) (solvent: toluene) and reduced to polystyrene (hereinafter, same).

Examples of component (B) include siloxanes containing an alkenyl group at the both terminals, siloxanes containing an alkenyl group in a side chain, siloxanes containing an alkenyl group at one of the terminals and in a side chain, siloxanes containing an alkenyl group at both terminals and in a side chain, and siloxanes containing a branched alkenyl group.

More specifically, examples of component (B) include the following alkenyl group-containing organopolysiloxanes:

$$(ViMe_2SiO_{1/2})_2(Me_2SiO_{2/2})_{1\sim n}$$

$$(ViMe_2SiO_{1/2})_1(Me_2SiO_{2/2})_{1\sim n}(ViMeSiO_{2/2})_{1\sim m}$$

$$(Me_3SiO_{1/2})_2(Me_2SiO_{2/2})_{1\sim n}(ViMeSiO_{2/2})_{2\sim m}$$

$$(ViMe_2SiO_{1/2})_{3\sim p}(Me_2SiO_{2/2})_{0\sim n}(ViMeSiO_{2/2})_{0\sim m}(MeSiO_{3/2})_{1\sim q}$$

$$(ViMe_2SiO_{1/2})_{4\sim p}(Me_2SiO_{2/2})_{0\sim n}(ViMeSiO_{2/2})_{0\sim m}(MeSiO_{3/2})_{1\sim q}(SiO_{4/2})_{1\sim r}$$

wherein Me is $CH_3$- and Vi is $CH_2$=CH-; n, m, p, q, and r are an integer of 0 or more, and the aforesaid organopolysiloxanes have a viscosity at 25°C of 5 to 70,000 mPa·s (as a viscosity of a 30 mass% solution in toluene).

Component (C)

Component (C) is an organohydrogen polysiloxane represented by the following average composition formula (2) and having at least two hydrogen atoms each bonded to a silicon atom (Si-H groups) in one molecule.

$$R^2_bH_cSiO_{(4-b-c)/2} \qquad (2)$$

wherein $R^2$ is, independently of each other, a substituted or unsubstituted monovalent hydrocarbon group having 1 to 12 carbon atoms other than an alkenyl group, and b and c are positive numbers satisfying the equations $0.7\leq b\leq 2.1$, $0.001\leq c\leq 1.0$, and $0.8\leq b+c\leq 3.0$. Component (C) may be used either alone or in combination. Component (C) functions a crosslinking agent to form a crosslinked structure by hydrosilylation of the Si-H group in component (C) with the alkenyl group in component (B).

The organohydrogen polysiloxane (C) preferably has 3 to 200, more preferably 10 to 100, Si-H groups in one molecule. The amount of the Si-H group is preferably 0.001 to 3.5 mol/100 g, more preferably 0.01 to 2.5 mol/100 g, still more preferably 0.02 to 2.0 mol/100 g. If the amount of the Si-H group is too small, curing properties or adhesion may be worse. If the amount of the Si-H group is too large, the peeling force may be too large.

In the aforesaid average composition formula (2), $R^2$ is a substituted or unsubstituted monovalent hydrocarbon group other than an alkenyl group. Examples of the monovalent hydrocarbon group include the aforesaid groups mentioned for $R^1$ in the formula (1). At least 50 mol%, typically 60 to 100 mol%, of $R^2$ is preferably a methyl group. If the percentage of the methyl group is less than 50 mol%, the compatibility of component (C) with component (B) may be inferior, so that the resulting composition may be clouded or undergo phase separation. In the aforesaid formula, "b" is the positive number satisfying the equation $0.7\leq b\leq 2.1$, "c" is the positive number satisfying the equation $0.001\leq c\leq 1.0$, and b+c satisfies the equation $0.8\leq b+c\leq 3.0$. The organohydrogen polysiloxane may be either linear or branched.

The viscosity at 25°C of component (C) is not particularly limited and is preferably 2 to 1,000 mPa·s, more

preferably 2 to 500 mPa·s, still more preferably 5 to 200 mPa·s, as determined by a rotational viscometer. If the viscosity at 25°C is lower than the aforesaid lower limit, adhesion to a substrate may be worse. If the viscosity is higher than the aforesaid upper limit, curability may be poor, so that the residual adhesion may be too low or the peeling force may be too large. Component (C) preferably has a weight average molecular weight of 100 to 10,000, more preferably 200 to 5,000. If the weight average molecular weight of component (C) is smaller than the aforesaid lower limit, adhesion may be significantly worse. If the weight average molecular weight is larger than the aforesaid upper limit, the reactivity may be worse, so that the residual adhesion may be too low or the peeling force may be too large. The weight average molecular weight is determined as described above.

Examples of the organohydrogen polysiloxane (C) include siloxanes containing a hydrogensilyl group at both ends, siloxanes containing a hydrogensilyl group in a side chain, siloxanes containing a hydrogensilyl group at one of the terminals and in a side chain, and siloxanes containing a hydrogensilyl group at both terminals and in a side chain. More specific examples include the following organohydrogen polysiloxanes:

$$(MeHSiO_{2/2})_{2\sim200}(Me_2SiO_{2/2})_{0\sim200}$$

$$(Me_3SiO_{1/2})_2(MeHSiO_{2/2})_{2\sim200}$$

$$(Me_3SiO_{1/2})_2(MeHSiO_{2/2})_{2\sim200}(Me_2SiO_{2/2})_{1\sim200}$$

$$(Me_2HSiO_{1/2})_2(MeHSiO_{2/2})_{0\sim198}(Me_2SiO_{2/2})_{0\sim200}$$

$$(Me_3SiO_{1/2})_{3\sim12}(MeHSiO_{2/2})_{2\sim200}(Me_2SiO_{2/2})_{0\sim200}(MeSiO_{3/2})_{1\sim10}$$

$$(Me_3SiO_{1/2})_{3\sim12}(MeHSiO_{2/2})_{1\sim199}(Me_2SiO_{2/2})_{0\sim200}(HSiO_{3/2})_{1\sim10}$$

wherein Me is $CH_3$-.

Amounts of component (B) and component (C) in the curable organopolysiloxane are such that the ratio of the number of the Si-H group in component (C) to the number of the alkenyl group in component (B) is 1 to 5, more preferably 1.2 to 3. If the amount of component (C) ratio is smaller than the aforesaid lower limit, curability of the composition and adhesion of the cured product may be insufficient. If the ratio is larger than the aforesaid upper limit, the amount of the residual Si-H group may be too large, so that the peeling force may be too large.

Other component

The curable organopolysiloxane composition may optionally comprise other component in addition to the aforesaid components (A) to (C). Examples of the other component will be described below. The other component may be used either alone or in combination.

Alkenyl group-containing compound other than component (B)

The composition of the present invention may further comprise, in addition to component (B), an alkenyl group-containing compound which addition-reacts with component (C). The alkenyl group-containing compound other than component (B) participates preferably in the formation of a cured product and includes organopolysiloxanes having one alkenyl group per molecule. The compound may have, for example, any of a linear, cyclic, branched, or three-dimensional network structure.

Further, an alkenyl group-containing organic compound other than the aforesaid organopolysiloxane may be added. Examples of the compound include monomers such as α-olefins, butadiene, and diacrylates derived from a polyfunctional alcohol; polyolefins such as polyethylene, polypropylene, and copolymers of styrene and another ethylenically unsaturated compound (such as acrylonitrile or butadiene); and oligomers or polymers derived from a functionally substituted organic compound such as an acrylic acid, methacrylic acid, or maleic acid ester. These alkenyl group-containing compounds may be either liquid or solid at room temperature.

Addition reaction regulating agent

An addition reaction regulating agent may be added to ensure a sufficient pot life of the composition. The addition reaction regulating agent may be any compound which suppresses the effect of the aforesaid platinum-group metal catalyst (A) for promoting the curing, and is not particularly limited. Examples of such include phosphorus-containing compounds such as triphenylphosphine; nitrogen-containing compounds such as tributylamine, tetramethylethylenediamine, and benzotriazole; sulfur-containing compounds; acetylene alcohols such as 1-ethynylcyclohexanol, 3-methyl-1-butyn-3-ol, 3,5-dimethyl-1-hexyn-3-ol, 3-methyl-1-penten-3-ol, and phenylbutynol; acetylene-based compounds such as 3-methyl-3-1-penten-1-yne and 3,5-dimethyl-1-hexyn-3-yne; compounds containing two or more alkenyl groups; hydroperoxyl compounds; and maleic acid derivatives.

The extent of the curing suppression effect of the addition reaction regulating agents depends on the chemical structure of the addition reaction regulating agents. The amount of the addition reaction regulating agent may be preferably adjusted, depending on the chemical structure. The optimum amount of the addition reaction regulating agent may provide the composition having excellent storage stability for a long term at room temperature and excellent heat curing property. A typical amount of the addition reaction regulating agent is preferably 0.001 to 5 parts by mass, more preferably 0.01 to 3 parts by mass, relative to the total 100 parts by mass of the components (A) to (C).

Organic solvent

The organopolysiloxane composition may further comprise an organic solvent to reduce the viscosity. Preferred examples of the organic solvent include organic solvents which is soluble in the organopolysiloxane and does not include siloxane solvents, such as toluene, hexane, xylene and methyl ethyl ketone; low-viscosity cyclic siloxanes such as octamethyltetrasiloxane and decamethylpentasiloxane, and organopolysiloxanes (siloxane solvents) such as linear or branched siloxanes whose side-chain length is short. Even when the composition comprises the organic solvent, the properties of the present composition does not deteriorate.

The amount of the organic solvent is preferably 3 to 50 times, more preferably 8 to 30 times the total mass of components (B) and (C).

Other optional components

The organopolysiloxane composition may further comprise a linear organopolysiloxane having a high molecular weight, other than those for components (A) to (C), to have slipperiness. The organopolysiloxane composition may also comprise an aryl group-containing silicone, a silicone resin, a silica, and a low molecular weight organopolysiloxane having a low molecular weight and having neither hydrogen atom bonding to a silicon atom, nor alkenyl group bonding to a silicon atom, other than those for components (A) to (C), in order to regulate the peeling force. Further, the organopolysiloxane may comprise known antioxidants, pigments, stabilizers, antistatic agents, anti-foaming agents, adhesion improvers, thickeners, and inorganic fillers such as silica, as long as the effects of the present invention are not hindered.

[Method for preparing the curable organopolysiloxane composition]

The curable organopolysiloxane composition of the present invention may be obtained by mixing predetermined amounts of components (A), (B) and (C) and, if necessary, the addition reaction regulating agent and the optional components. From the standpoint of the pot life, the composition is preferably prepared by mixing components (B) and (C) and the optional components uniformly in advance, and then adding the catalyst composition (A) immediately before use.

The viscosity at 25°C of the curable organopolysiloxane composition of the present invention is preferably 10 to 5,000 mPa·s, more preferably 50 to 3,000 mPa·s, as determined by a rotational viscometer.

[Coated product, i.e., release sheet]

The present invention further provides a release sheet comprising a sheet-form substrate and one or two layers comprising a cured product of the curable organopolysiloxane composition, the layer being on one or both surfaces of the substrate. The layer is formed by applying the aforesaid curable organopolysiloxane composition to the one or both surfaces of the substrate, followed by heating.

The coating method, and heating and curing conditions are not particularly limited and may be properly selected. For example, the cured film is formed on the substrate by applying the curable organopolysiloxane composition as such on the one or both surfaces of the sheet-form substrate such as paper or film in a coating amount of 0.01 to 100 g/$m^2$ by a comma coater, lip coater, roll coater, die coater, knife coater, blade coater, rod coater, kiss coater, gravure coater, wire bar coater, screen coating, dipping coating or cast coating, followed by heating at 50 to 200°C for 1 to 120 seconds. To provide a release sheet on both sides of a substrate, it is preferred to form a release sheet on one side, and then on the other side.

The sheet-form substrate for the release sheet in the present invention may be paper or any known film. Examples of the substrate include polyethylene laminate paper, coated paper such as glassine paper, quality paper, kraft paper, and clay-coated paper; synthetic paper such as Yupo (synthetic paper made from polypropylene resin);

polyethylene films; polypropylene films such as CPP (cast polypropylene) and OPP (oriented polypropylene); polyester films such as polyethylene terephthalate film; polyamide films; polyimide films; polylactic acid films; polyphenol films; and polycarbonate films. Process paper for the production of artificial leather, ceramic sheet, double-sided separator may also be used as the substrate. The surface of the substrate may be subjected to corona treatment, etching treatment, primer treatment, or plasma treatment to improve the adhesion between the substrate and the release layer.

EXAMPLES

The present invention will be explained below in further detail with reference to a series of the Examples and the Comparative Examples, although the present invention is in no way limited to, or by, these Examples.

The weight average molecular weight was determined by gel permeation chromatography (GPC) (solvent: toluene, reduced to polystyrene) and the viscosity was determined at 25°C by a rotational viscometer.

In the following Examples, the alphabetic abbreviations indicate the following siloxane units in the average composition of the organopolysiloxane.

M: $(CH_3)_3SO_{1/2}$
$M^{Vi}$: $(CH_2{=}CH)(CH_3)_2SiO_{1/2}$
D: $(CH_3)_2SiO_{2/2}$
$D^H$: $(CH_3)HSiO_{2/2}$
$D^A$: $(CH_2{=}CHCOOC_3H_6)(CH_3)SiO_{2/2}$
T: $(CH_3)SiO_{3/2}$

The following components were used in the Examples and the Comparative Examples.

Component (A)

i) Karstedt catalyst:
Complex of platinum with 1,3-divinyltetramethyldisiloxane, having 21.5 mass% of platinum atom
ii) Organopolysiloxane having an acryloyl group in the side chain:

$D^A_4$ having a weight average molecular weight of 730
$M_2D^A_{10}D_{50}$ having a weight average molecular weight of 4,120
$M_3D^A_{12}D_{150}T_1$ having a weight average molecular weight of 14,620
$M_3D^A_{24}D_{210}T_1$ having a weight average molecular weight of 26,700

iii) Organopolysiloxane having no (meth)acryloyl group:

$M_2D_{45}$ having a viscosity of 40 mPa·s
$M^{Vi}_2D_{15}$ having a vinyl value of 0.021 mol/100 g and a viscosity of 10 mPa·s
$M^{Vi}_2D_{155}$ having a vinyl value of 0.017 mol/100 g and a viscosity of 430 mPa·s

Component (B):

Methyl vinyl polysiloxane: $M^{Vi}_2D_{155}$ having a vinyl value of 0.017 mol/100 g and a viscosity of 430 mPa·s

Component (C):

Methyl hydrogen polysiloxane: $M_2D^H_{64}$ having an Si-H content of 1.61 mol/100 g and a viscosity of 35 mPa·s

The other component:
Addition reaction regulating agent: 1-ethynylcyclohexanol (ECHA)

Components for the Comparative Examples

$M_2D^A_1D_4$ having a weight average molecular weight of 630

Trikosaethylene glycol diacrylate (1): both-terminal type diacrylate having 23 ethylene glycol units and having a molecular weight of 1,108
Propoxylated ethoxylated bisphenol A diacrylate (2) having a molecular weight of 1,296
Acrylic acid having a molecular weight of 72

Preparation of a catalyst composition and evaluation of storage stability

[Example 1]

Mixed uniformly were 0.020 parts by mass of the Karstedt catalyst having 21.5 mass% of platinum atom as component i) and 1.98 parts by mass of a cyclic organopolysiloxane which is represented by an average molecular formula $D^A_4$ and which has an acryl group in the side chain as component ii) to obtain a colorless and transparent, platinum catalyst composition (A-1) having 0.215 mass% of platinum atom.

[Examples 2 to 7, and Comparative Examples 1 to 6]

The procedures of Example 1 were repeated, except that the composition of Example 1 was replaced by the compositions (parts by mass) described in the following Tables 1 and 2 to, thereby, obtain platinum catalyst compositions (A-2) to (A-7) and, for comparison, platinum catalyst compositions (a-1) to (a-6).

[Evaluation of storage stability]

1 gram of each of the platinum catalyst compositions obtained in Examples 1 to 7 and Comparative Examples 1 to 6 was placed in a 5-ml glass bottle and stored in a hermetically sealed drier at 105°C. After one hour, the bottle was taken out from the drier and the appearance of the composition was observed to evaluate the storage stability at a high temperature. The results are as shown in Table 1.

Table 1

| | | Ex.1 | Ex.2 | Ex.3 | Ex.4 | Ex.5 | Ex.6 | Ex.7 |
|---|---|---|---|---|---|---|---|---|
| Platinum catalyst composition | | (A-1) | (A-2) | (A-3) | (A-4) | (A-5) | (A-6) | (A-7) |
| i) | Karstedt catalyst | 0.020 | 0.020 | 0.020 | 0.020 | 0.020 | 0.020 | 0.020 |
| ii) | $D^A_4$ | 1.98 | | | | | | |
| | $M_2D^A_{10}D_{50}$ | | 1.98 | 1.00 | | | 0.08 | 1.98 |
| | $M_3D^A_{12}D_{150}T_1$ | | | | 1.00 | | | |
| | $M_3D^A_{24}D_{210}T_1$ | | | | | 1.00 | | |
| iii) | $M^{Vi}_2D_{15}$ | | | 0.98 | | | | |
| | $M^{Vi}_2D_{155}$ | | | | 0.98 | | | 18 |
| | $M_2D_{45}$ | | | | | 0.98 | | |
| Amount of platinum in the catalyst composition, mass% | | 0.215 | 0.215 | 0.215 | 0.215 | 0.215 | 4.3 | 0.022 |
| Appearance | Initial | colorless and transparent | colorless and transparent | colorless and transparent | colorless and transparent | colorless and transparent | light yellow and transparent | colorless and transparent |
| | After storage at 105°C for one hour | light yellow and transparent | light yellow and transparent | light yellow and transparent | light yellow and transparent | light yellow and transparent | light yellow and transparent | colorless and transparent |

Table 2

| | | Com. Ex. 1 | Com. Ex. 2 | Com. Ex. 3 | Com. Ex. 4 | Com. Ex. 5 | Com. Ex. 6 |
|---|---|---|---|---|---|---|---|
| Platinum catalyst composition | | (a-1) | (a-2) | (a-3) | (a-4) | (a-5) | (a-6) |
| i) | Karstedt catalyst | 0.020 | 0.020 | 0.020 | 0.020 | 0.020 | 0.020 |
| Others | $M_2D^A{}_{10}D_{50}$ | | 0.020 | | | | |
| | $M_2D^A{}_1D_4$ | | | 1.00 | | | |
| | Trikosaethylene glycol diacrylate | | | | 1.00 | | |
| | Propoxylated ethoxylated bisphenol A diacrylate | | | | | 1.00 | |
| | Acrylic acid | | | | | | 1.00 |
| iii) | $M^{Vi}{}_2D_{155}$ | 1.98 | | | | | |
| | $M_2D_{45}$ | | | 0.98 | 0.98 | 0.98 | 0.98 |
| Platinum amount in the catalyst composition, mass% | | 0.215 | 10.8 | 0.215 | 0.215 | 0.215 | 0.215 |
| Appearance | Initial | colorless and transparent | colorless and transparent | colorless and transparent | colorless and transparent | colorless and transparent | colorless and transparent |
| | After storage at 105°C for one hour | black and non-transparent | black and non-transparent | black and non-transparent | black and non-transparent | black and non-transparent | black and non-transparent |

As seen in Table 2, the platinum catalyst composition (a-1) obtained by mixing the organopolysiloxane containing no acryloyl group with the platinum catalyst, the platinum catalyst composition (a-2) having an excess amount of platinum atom, the platinum catalyst composition (a-3) obtained by mixing the organopolysiloxane having only one acryl group in the side chain and the platinum catalyst, and the platinum catalyst compositions (a-4), (a-5) and (a-6), each obtained by mixing the acrylate, instead of the organopolysiloxane, with the platinum catalyst, turned black and non-transparent after storage at 105°C for one hour, so that the storage stability was poor. In contrast, as seen in Table 1, the platinum catalyst compositions (A-1) to (A-7) of the present invention obtained by mixing the organopolysiloxane having two or more acryloyl groups in the side chain and the platinum catalyst remained colorless or light yellow, and transparent after storage at 105°C for one hour and, thus, had high storage stability.

Preparation of a curable organopolysiloxane composition

[Example 8]

Mixed uniformly were 100 parts by mass of a linear methyl vinyl polysiloxane which is represented by the average molecular formula: $M^{Vi}{}_2D_{155}$ and capped with a vinyl group at both terminals as component (B), 2.3 parts by mass of methyl hydrogen polysiloxane represented by the average molecular formula $M_2D^H{}_{64}$ as component (C), and 0.3 parts by mass of 1-ethynylcyclohexanol. Then, the catalyst composition (A-1) prepared in Example 1 was added to the mixture in an amount such that the amount of the platinum atom was 41.1 ppm, relative to the total mass of components (A) to (C), and stirred uniformly to obtain an organopolysiloxane composition. In the composition, the ratio (H/Vi) of the number of the Si-H group in component (C) to the number of the alkenyl group in component (B) was 2.18.

[Examples 9 to 15]

The procedures of Example 8 were repeated to mix components (B) and (C) and 1-ethynylcyclohexanol, except that the composition of Example 8 was replaced by the compositions (parts by mass) described in the following Table 3. The platinum catalyst compositions (A-2) to (A-7) obtained in the Examples 2 to 7 were added to the mixture and uniformly mixed to obtain the organopolysiloxane compositions of Examples 9 to 15.

[Comparative Examples 7 to 12 and Referential Example]

The procedures of Example 8 were repeated to mix components (B) and (C) and 1-ethynylcyclohexanol, except that the composition of Example 8 was replaced by the compositions (parts by mass) described in the following Table 4. The platinum catalyst compositions (a-1) to (a-6) obtained in Comparative Examples 1 to 6 were added to the mixture and uniformly mixed to obtain the organopolysiloxane compositions of Comparative Examples 7 to 12 and Referential Example.

The viscosity at 25°C of each of the aforesaid organopolysiloxane compositions was determined. Further, release sheets were prepared in the method described below and their peeling forces were measured. The results are as shown in Tables 3 and 4.

[Curing of the curable organopolysiloxane composition]

The curable organopolysiloxane composition was applied onto a metal roll of an RI tester (ex IHI Machinery and Furnace), spread uniformly by rotating the two rolls for 45 seconds, and transferred from the rubber roll to a polyethylene laminate paper. The polyethylene laminate paper with the transferred composition was heated in a hot wind drier of 110°C for 20 seconds to obtain a release paper having a cured film of a basis weight of 0.9 to 1.1 $g/m^2$.

[Peeling force]

The release paper obtained in the aforesaid curing method was aged at 25°C for 24 hours and then a 25-mm wide acrylic adhesive tape, TESA-7475 (ex tesa UK Ltd), was put on the surface (which the composition was transferred from the rubber roll) of the resulting cured film of the release paper and was cut into a size of 25 mm × 23 cm. The resulting piece was sandwiched between two glass plates and aged at 70°C for 24 hours under a load of 20 $g/cm^2$ to prepare a test sample. The test sample was air cooled for about 30 minutes and then the TESA-7475 tape was peeled off from the release layer using a tensile tester (DSC-500 tester ex. Shimadzu) at 0.3 m/min and an angle of 180° and to determine the force required for peeling.

[Residual adhesion]

The adhesive surface of the TESA-7475 tape peeled off from the release layer in the aforesaid peeling force test was attached to a stainless steel plate and a 2-kg roller was moved back and force on the plate to apply a load. These were allowed to stand for 30 minutes. Then one end of the TESA-7475 tape was peeled off and was pulled in a direction of 180° relative to the stainless steel plate to peel the tape off at a release rate of 0.3 m/min. The force required for peeling, peeling force A in N/25 mm, was determined.

An unused TESA-7475 tape was attached to another stainless steel plate. Under the same conditions as in the aforesaid test, the force required for peeling the TESA-7475 tape off from the stainless steel plate, peeling force B in N/25 mm, was determined.

The residual adhesion in percent was calculated according to the following equation:

$$\text{Residual adhesion in percent} = (\text{peeling force A} / \text{peeling force B}) \times 100$$

[Transfer of the organopolysiloxane]

A cured film of the curable organopolysiloxane composition was formed on the surface of a polyethylene laminate paper in the same manner as in the aforesaid peeling force test. A 36-$\mu$m thickness of polyethylene terephthalate film was put on the surface of the cured film and pressure-bonded under a pressure of 10 MPa at room temperature for 20 hours. Then the polyethylene terephthalate film was peeled off from the cured film. An oily ink (trade name; Magic Ink, ex Teranishi Chemical Industry) was applied to the surface of the aforesaid polyethylene terephthalate film, which surface had been brought into contact with the silicone cured film, to observe repellency against the ink.

Evaluation was conducted according to the following criteria and the results are as shown in Tables 3 and 4.

No ink was repelled, which means that no, or slight, silicone transferred: Good
Ink was repelled, which means that much silicone transferred: Poor

[Curability]

The curable organopolysiloxane composition was applied on a metal roll of an RI tester and uniformly spread by rotating the metal roll and a rubber roll being in contact with the metal roll, for 45 seconds. Then the composition was transferred from the rubber roll to a polyethylene laminate paper. The polyethylene laminate paper bringing the composition was heated in a hot air drier of 110°C for 13 seconds to obtain a release paper having a cured film having a thickness of 0.9 to 1.1 g/$m^2$. Immediately after the release paper was taken out from the drier, the surface of the cured film was strongly rubbed 10 times with a forefinger and then a red Magic Ink was applied on the surface. The density of the ink and the state of the cured film were observed.

Evaluation was conducted according to the following criteria and the results are as shown in Tables 3 and 4.

A clear finger mark was observed, which means that the curing was Poor.

Almost no finger mark was observed, which means that the curing was Good.

[Table3]

| Component | | Ex.8 | Ex.9 | Ex.10 | Ex.11 | Ex.12 | Ex.13 | Ex.14 | Ex.15 |
|---|---|---|---|---|---|---|---|---|---|
| A) | Platinum catalyst composition (A-1) | 2.0 | | | | | | | |
| | Platinum catalyst composition (A-2) | | 2.0 | | | | | | |
| | Platinum catalyst composition (A-3) | | | 2.0 | 1.0 | | | | |
| | Platinum catalyst composition (A-4) | | | | | 2.0 | | | |
| | Platinum catalyst composition (A-5) | | | | | | 2.0 | | |
| | Platinum catalyst composition (A-6) | | | | | | | 0.1 | |
| | Platinum catalyst composition (A-7) | | | | | | | | 20 |
| B) | $M^{Vi}_2D_{155}$ | 100 | 100 | 100 | 100 | 100 | 100 | 100 | 100 |
| C) | $M_2D^H_{64}$ | 2.3 | 2.3 | 2.3 | 2.3 | 2.3 | 2.3 | 2.3 | 2.3 |
| Other | ECHA | 0.3 | 0.3 | 0.3 | 0.3 | 0.3 | 0.3 | 0.3 | 0.3 |
| Platinum amount in catalyst composition, ppm | | 41.1 | 41.1 | 41.1 | 20.8 | 41.1 | 41.1 | 41.9 | 35.1 |
| H/Vi | | 2.18 | 2.18 | 1.94 | 2.05 | 2.16 | 2.18 | 2.18 | 1.85 |
| Viscosity, mPa·s | | 380 | 390 | 370 | 370 | 390 | 380 | 390 | 400 |
| Peeling force, N/25mm | | 0.14 | 0.15 | 0.16 | 0.15 | 0.14 | 0.13 | 0.17 | 0.12 |
| Residual adhesion, % | | 96 | 95 | 97 | 98 | 95 | 96 | 94 | 97 |
| Transfer | | Good | Good | Good | Good | Good | Good | Good | Good |
| Curability | | Good | Good | Good | Good | Good | Good | Good | Good |

Table 4

| Component | | Com. Ex. 7 | Com. Ex. 8 | Com. Ex. 9 | Com. Ex. 10 | Com. Ex. 11 | Com. Ex. 12 | Ref. Ex. |
|---|---|---|---|---|---|---|---|---|
| A) | Platinum catalyst composition (a-1) | 2.0 | | | | | | 6.0 |
| | Platinum catalyst composition (a-2) | | 0.04 | | | | | |
| | Platinum catalyst composition (a-3) | | | 2.0 | | | | |
| | Platinum catalyst composition (a-4) | | | | 2.0 | | | |
| | Platinum catalyst composition (a-5) | | | | | 2.0 | | |
| | Platinum catalyst composition (a-6) | | | | | | 2.0 | |
| B) | $M^{Vi}_2D_{155}$ | 100 | 100 | 100 | 100 | 100 | 100 | 100 |

(continued)

| Component | | Com. Ex. 7 | Com. Ex. 8 | Com. Ex. 9 | Com. Ex. 10 | Com. Ex. 11 | Com. Ex. 12 | Ref. Ex. |
|---|---|---|---|---|---|---|---|---|
| C) | $M_2D^H_{64}$ | 2.3 | 2.3 | 2.3 | 2.3 | 2.3 | 2.3 | 2.3 |
| Other | ECHA | 0.3 | 0.3 | 0.3 | 0.3 | 0.3 | 0.3 | 0.3 |
| Platinum amount in catalyst composition, ppm | | 41.1 | 41.9 | 41.1 | 41.1 | 41.1 | 41.1 | 118.8 |
| H/Vi | | 2.14 | 2.18 | 2.18 | 2.18 | 2.18 | 2.18 | 2.06 |
| Viscosity, mPa·s | | 390 | 390 | 370 | 370 | 370 | 370 | 390 |
| Peeling force, N/25mm | | 0.39 | 0.37 | 0.31 | 0.32 | 0.35 | 0.45 | 0.13 |
| Residual adhesion, % | | 80 | 82 | 85 | 81 | 81 | 74 | 96 |
| Transfer | | Poor | Poor | Poor | Poor | Poor | Poor | Good |
| Curability | | Poor | Poor | Poor | Poor | Poor | Poor | Good |

As seen in Table 4, the composition of the Referential Example comprises the platinum catalyst composition (a-1) for comparison and has such a large platinum catalyst amount as 118.8 ppm, but does not comprise the platinum catalyst, nor the (meth)acryloyl group-containing organopolysiloxane. The aforesaid composition cures sufficiently and, therefore, shows good results in curability and the organopolysiloxane transfer property. Further, the composition offers the release paper properties such as a low peeling force and high residual adhesion.

The composition of Comparative Example 7 comprises the same platinum catalyst composition (a-1) as in the Referential Example, but has a reduced platinum catalyst amount of 41.1 ppm. Curing of the composition does not proceed sufficiently in the heat treatment at 110°C for 13 seconds, so that a clear finger mark is seen on the surface after the rubbing with a finger. In addition, a cured film was obtained by the heat treatment at 110°C for 20 seconds, but curing is insufficient. Accordingly, when the adhered film was peeled off, a large amount of the organopolysiloxane transfers to the film. Therefore, both the peeling force and the residual adhesion are inferior to those of the release paper of the Referential Example.

The compositions of Comparative Examples 8 to 12 comprise the platinum catalyst compositions (a-2) to (a-6), respectively, prepared in Comparative Examples 2 to 6 with the same platinum concentration as in Comparative Example 7. The resulting compositions do not cure sufficiently. Accordingly, the amount of the transferred organopolysiloxane is large, the peeling force is higher than that in the Referential Example, and the residual adhesion is low. Thus, the intended properties of the release paper are not obtained.

In contrast, as seen in Table 3, the compositions of Examples 8 to 15 comprise platinum catalyst compositions (A-1) to (A-7), respectively, prepared in Examples 1 to 7 having the same platinum concentration as that in Comparative Example 7. Although the platinum concentration was small in the compositions of Examples 8 to 15, the curing proceeds sufficiently, almost no finger mark is formed by rubbing the coated surface, and the silicone transfer amount is small. In addition, the peeling force and the residual adhesion are similar to those of the composition of the Referential Example, showing that the addition reaction proceeds sufficiently, even with a small platinum atom amount, relative to the composition of the Referential Example.

As described above, the catalyst composition of the present invention comprises the platinum-group metal catalyst and the organopolysiloxane having at least two (meth)acryloyl groups in one molecule, whereby the storage stability of the platinum-group metal catalyst is improved and the small amount of the catalyst such as to give an amount of the platinum of 50 ppm proceeds the curing reaction of the composition sufficiently. The release sheet comprising the cured product of the curable organopolysiloxane composition containing the catalyst composition of the present invention has excellent release paper properties.

## INDUSTRIAL APPLICABILITY

The curable organopolysiloxane composition comprising the catalyst composition of the present invention cures sufficiently with a small amount of the platinum-group metal catalyst and forms a cured film having a peeling force comparable to that of conventional cured films. Therefore, the curable organopolysiloxane composition is suited for preparing release sheets. The amount of the platinum-group metal atom in the curable organopolysiloxane composition may be reduced, so that a release sheet is produced with significantly reduced costs.

## Claims

1. A catalyst composition comprising: i) a platinum-group metal catalyst; and ii) an organopolysiloxane having at least two (meth)acryloyl groups in one molecule, wherein the amount of the platinum-group metal atom is 0.01 to 5.0 mass%, based on the total mass of the catalyst composition.

2. The catalyst composition according to claim 1, wherein the amount of the platinum-group metal atom is 0.1 to 0.6 mass%, based on the total mass of the catalyst composition.

3. The catalyst composition according to claim 1 or claim 2, wherein i) the platinum-group metal catalyst is Karstedt catalyst having a 1,3-divinyltetramethyldisiloxane ligand.

4. The catalyst composition according to any one of claims 1 to 3, wherein the catalyst composition further comprises iii) an organopolysiloxane having no (meth)acryloyl group in an amount of 99 mass% or less, based on the total mass of the catalyst composition, and the amount of ii) the organopolysiloxane is 0.5 to 99.5 mass%, based on the total mass of the catalyst composition.

5. The catalyst composition according to any one of claims 1 to 4, wherein ii) the organopolysiloxane has a weight-average molecular weight of 500 or more.

6. A curable organopolysiloxane composition comprising the following components (A) to (C):

   (A) the catalyst composition according to any one of claims 1 to 5 in such an amount that the amount of the platinum-group metal atom is 1 to 100 mass ppm, based on the total mass of components (A), (B) and (C);
   (B) an organopolysiloxane having at least two alkenyl groups each bonded to a silicon atom; and
   (C) an organohydrogen polysiloxane having at least two hydrogen atoms each bonded to a silicon atom in such an amount that the ratio of the number of hydrogen atoms each bonded to the silicon atom in component (C) to the number of the alkenyl groups in component (B) is 1 to 5.

7. The curable organopolysiloxane composition according to claim 6, wherein the amount of ii) the organopolysiloxane comprised in the catalyst composition (A) is 0.01 to 5 parts by mass, based on the total mass of components (A), (B) and (C).

8. The curable organopolysiloxane composition according to claim 6 or claim 7, wherein component (B) is represented by the following average composition formula (1):

   $$R^1_aSiO_{(4-a)/2} \qquad (1)$$

   wherein $R^1$ is, independently of each other, a substituted or unsubstituted monovalent hydrocarbon group having 1 to 12 carbon atoms, at least two of $R^1$ are an alkenyl group, and "a" is a positive number satisfying the equation $0<a\leq3$.

9. The curable organopolysiloxane composition according to any one of claims 6 to 8, wherein component (C) is represented by the following average composition formula (2):

   $$R^2_bH_cSiO_{(4-b-c)/2} \qquad (2)$$

   wherein $R^2$ is, independently of each other, a substituted or unsubstituted monovalent hydrocarbon group having 1 to 12 carbon atoms precluding an alkenyl group, b and c are positive numbers satisfying the equations $0.7\leq b\leq2.1$, $0.001\leq c\leq1.0$ and $0.8\leq b+c\leq3.0$, and component (C) has at least two hydrosilyl groups in one molecule.

10. A release sheet comprising a sheet-form substrate and a layer comprising of a cured product of the curable organopolysiloxane composition according to any one of claims 6 to 9, the layer being on at least one surface of the substrate.

**INTERNATIONAL SEARCH REPORT**

International application No. PCT/JP2020/028326

A. CLASSIFICATION OF SUBJECT MATTER

B32B 27/00(2006.01)i; C08K 5/5425(2006.01)i; C08K 5/56(2006.01)i; C08L 83/07(2006.01)i; C09J 7/40(2018.01)i

FI: C08L83/07; C08K5/56; C08K5/5425; B32B27/00 L; B32B27/00 101; C09J7/40

According to International Patent Classification (IPC) or to both national classification and IPC

B. FIELDS SEARCHED

Minimum documentation searched (classification system followed by classification symbols)

B32B27/00; C08K5/5425; C08K5/56; C08L83/07; C09J7/40

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 9-77979 A (SHIN-ETSU CHEMICAL CO., LTD.) 25.03.1997 (1997-03-25) claims 2, 4, paragraph [0021], example 3, compounds 3-5 | 6-10<br>1-5 |
| X | JP 2011-254009 A (SHIN-ETSU CHEMICAL CO., LTD.) 15.12.2011 (2011-12-15) claims 1-3, paragraphs [0051]-[0052] | 6-9 |
| X | JP 11-335564 A (SHIN-ETSU CHEMICAL CO., LTD.) 07.12.1999 (1999-12-07) claims, examples, table 1 | 6-9 |
| A | JP 4-77558 A (SHIN-ETSU CHEMICAL CO., LTD.) 11.03.1992 (1992-03-11) | 1-10 |
| A | WO 2016/060084 A1 (SHIN-ETSU CHEMICAL CO., LTD.) 21.04.2016 (2016-04-21) | 1-10 |
| A | JP 2005-343974 A (SHIN-ETSU CHEMICAL CO., LTD.) 15.12.2005 (2005-12-15) | 1-10 |

☐ Further documents are listed in the continuation of Box C.    ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 24 September 2020 (24.09.2020) | 06 October 2020 (06.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/028326

| Patent Documents referred in the Report | Publication Date | Patent Family | Publication Date |
|---|---|---|---|
| JP 9-77979 A | 25 Mar. 1997 | (Family: none) | |
| JP 2011-254009 A | 15 Dec. 2011 | US 2011/0297209 A1 claims 1-3, paragraphs [0079] - [0080] EP 2392626 A1 CN 102276989 A | |
| JP 11-335564 A | 07 Dec. 1999 | US 6201092 B1 claims, examples, table 1 EP 934981 A2 | |
| JP 4-77558 A | 11 Mar. 1992 | (Family: none) | |
| WO 2016/060084 A1 | 21 Apr. 2016 | US 2017/0233514 A1 EP 3208322 A1 KR 10-2017-0073619 A CN 107075341 A TW 201623351 A | |
| JP 2005-343974 A | 15 Dec. 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO4222924 B
- JP SHO4628795 B
- JP 47032072 A
- JP 2018520214 A
- JP SHO4732072 A